# EUROPÄISCHE PATENTANMELDUNG

(11) **EP 0 686 351 A2**
(43) Veröffentlichungstag der Anmeldung: **13.12.1995**
(21) Anmeldenummer: 95108342.7
(22) Anmeldetag: 31.05.1995
(51) Int. Cl.: A23G 3/32, A23G 3/04, A23G 3/00

(54) **Karamel und Verfahren zu seiner Herstellung**

(30) Priorität: 31.05.1994 CZ 131394
(71) Anmelder: Veselá, Kveta, CZ-140 00 Praha 4 (CZ)
(72) Erfinder: Veselá, Kveta, CZ-140 00 Praha 4 (CZ)
(74) Vertreter: Patentanwälte Beetz - Timpe - Siegfried Schmitt-Fumian - Mayr

(57) **Zusammenfassung**

Gegenstand der Erfindung sind ein Kräuterkaramel und Verfahren zu seiner Herstellung.

In bevorzugter Ausführung enthält der Karamel gemäß der Erfindung 15 bis 19 Gewichts-% wäßrigen Kräuterextrakt, 0,5 bis 6 Gewichts-% einer organischen Säure und 60 bis 88 Gewichts-% karamelisierten Zucker. Als Basis für den Kräuterextrakt kommen insbesondere Blüte oder Frucht des Holunders (Sambucus nigra), Blüten der Königskerze (Verbascum), Lindenblüten (Tilia), die Blüten des Kettenlattichkrauts (Taraxacum officinale) und das Blattwerk des Salbeis (Salvia officinalis) in Betracht. Als organische Säure eignen sich Zitronensäure und/oder Weinsäure und/oder Sorbinsäure.

Das Verfahren zum Herstellen des Kräuterkaramels läuft gemäß der Erfindung so ab, daß zunächst durch Erwärmen eines Gemischs aus Wasser und der jeweiligen Kräuterbasis ein Kräuterextrakt bereitet wird, diesem nach vorheriger Entfernung der Kräuterpflanze eine organische Säure und Zucker zugesetzt werden und die erhaltene Mischung unter fortwährender Entfernung entstehenden Schaums sanft gekocht wird, bis der Zucker karamelisiert. Die Auswahl der organischen Säure und der Kräuterbasis erfolgt bevorzugt nach den oben aufgeführten Angaben.

## Beschreibung

Die Erfindung betrifft einen Karamel, der sich als Nahrungsmittel und für medizinische Zwecke verwenden läßt, sowie Verfahren zum Herstellen eines solchen Karamels.

Die Verabreichung von Kräutern wie Löwenzahn für therapeutische Zwecke oder als Stärkungsmittel erfolgt bisher außer als Tee in Form von Honig oder Sirup. Die entsprechenden Rezepte für eine private Herstellung solcher Sirupe, wie sie sich meist in Zeitschriften oder auch in Kochbüchern finden, gehen im Falle des üblichsten Löwenzahnsirups aus von einem aus frischen Löwenzahnblüten hergestellten Extrakt, der 12 bis 24 Stunden mazeriert wird. Sodann wird Zucker beigegeben und der gezuckerte Saft erhitzt, um ohne Kochen so viel Flüssigkeit zu verdampfen, bis die gewünschte Dichte erreicht ist. Der erhaltene Honig ist von heller Farbe und dünnflüssig. Bei seinem Aufstreichen auf Brot neigt er zum Tropfen. Bei längerem Lagern des Honigs tritt Verzuckerung auf.

Ziel der Erfindung ist ein Kräuterkaramel, der sich bequemer handhaben läßt als der bisher bekannte Kräuterhonig und auch bei langer Lagerung nicht zum Verzuckern neigt.

Mit dieser Zielrichtung ist ein Karamel gemäß der Erfindung gekennzeichnet durch einen Gehalt an Kräuterextrakt, wobei dieser Extrakt bevorzugt als wäßriger Kräuterextrakt in Anwendung kommt.

Als Ausgangsmaterial für einen im Rahmen der Erfindung verwendeten Kräuterextrakt werden bevorzugt die getrockneten Teile der entsprechenden Pflanzen benutzt. Als solche Pflanzen bzw. Pflanzenteile kommen insbesondere Blüte und/oder Frucht des Holunders (Sambucus nigra), die Blüten der Königskerze (Verbascum), Lindenblüten (Tilia), Kettenlattichkraut (Taraxacum officinale) und das Blattwerk des Salbeis (Salvia officinalis) in Betracht. Dabei ist es gewünschtenfalls möglich, zwei oder auch mehr dieser Wirkstofflieferanten gemeinsam zu verwenden.

Gewünschtenfalls kann ein Kräuterkaramel nach der Erfindung einen Zusatz einer geringen Menge einer organischen Säure enthalten. Als solcher Zusatz kommen insbesondere Zitronensäure und/oder Weinsäure und/oder Sorbinsäure in Betracht.

In bevorzugter Ausführung zeichnet sich ein Kräuterkaramel gemäß der Erfindung aus durch eine Zusammensetzung, wie sie nachstehend angegeben ist:
- 15 bis 29 Gewichts-% wäßriger Kräuterextrakt,
- 0,5 bis 6 Gewichts-% Zitronensäure und/oder Weinsäure und/oder Sorbinsäure und
- 60 bis 88 Gewichts-% karamelisierterm Zucker.

Je nach der Art der verwendeten Wirkstoffpflanzen ist ein Kräuterkaramel gemäß der Erfindung dunkel goldgelb oder dunkel honigfarben mit einem Stich nach Rotbraun, aber stets transparent. Er opalisiert in geringem Maße, enthält aber keine makroskopischen Fremdstoffreste organischen oder anorganischen Ursprungs.

In Duft und Geschmack entspricht der Kräuterkaramel gemäß der Erfindung den für den Kräuterextrakt verwendeten Wirkstoffpflanzen ohne Fremdgeruch oder Beigeschmack. Dabei ist ers tets süß und von flüssiger bis breiartiger Konsistenz, ähnlich wie Bienenhonig. Auch nach längerem Lagern, über zwölf Monate und länger, tritt keine Verzuckerung auf.

Verwenden läßt sich der Kräuterkaramel gemäß der Erfindung als Präventivmittel gegen Erkrankungen der oberen Atemwege, als Vorbeugung während der Grippezeit und auch zur Stärkung des Nervensystems. Darüber hinaus kann er als um den Kräuterextrakt bereichertes Süßungsmittel bei der Zubereitung von Speisen auch für Kinder und Kranke verwendet werden.

Zum Herstellen eines Kräuterkaramels wird gemäß der Erfindung durch Erwärmen eines Gemischs aus Wasser und wenigstens einer Kräuterpflanze ein wäßriger Kräuterextrakt bereitet, die Kräuterpflanze abgetrennt, dem Extrakt Zucker zugesetzt und die so erhaltene Mischung unter ständigem Abschöpfen entstehenden Schaums sanft gekocht, bis der zugesetzte Zucker karamelisiert.

In bevorzugter Durchführung des Verfahrens gemäß der Erfindung wird dem Kräuterextrakt vor dem Kochen außer Zucker wenigstens eine organische Säure zugesetzt. Dabei kann dem Kräuterextrakt insbesondere wenigstens eine der folgenden Säuren zugesetzt werden: Zitronensäure, Weinsäure, Sorbinsäure.

In weiterer Ausgestaltung des Verfahrens gemäß der Erfindung kann die Mischung nach dem Karamelisieren des Zuckers und Abkühlung erneut für kurze Zeit sanft weitergekocht werden, um ein nochmaliges Karamelisieren zu bewirken. Dadurch lassen sich etwaige Schaumreste beseitigen, und der erhaltene Kräuterkaramel wird einwandfrei gereinigt.

Als Ausgangsmaterial für die das Verfahren gemäß der Erfindung einleitende Bereitung des Kräuterextrakts sind getrocknete Kräuterpflanzen bevorzugt.

Als Wirkstoffträger können bei der Bereitung des Kräuterextrakts insbesondere Blüte und/oder Frucht des Holunders (Sambucus nigra), die Blüte der Königskerze (Verbascum), Lindenblüten (Tilia), Kettenlattichkraut (Taraxacum officinale) oder das Blattwerk des Salbeis (Salvia officinalis) verwendet werden. Dabei ist es auch möglich, zwei oder mehr dieser Wirkstoffpflanzen gemeinsam einzusetzen.

Eine ganz besonders bevorzugte Ausführungsvariante für das Verfahren gemäß der Erfindung ist dadurch gekennzeichnet, daß 15 bis 29 Gewichts-% wäßriger Kräuterextrakt mit 0,5 bis 6 Gewichts-% Zitronensäure und/oder Weinsäure und/oder Sorbinsäure sowie 60 bis 88 Gewichts-% Zucker versetzt werden und die erhaltene Mischung unter mäßigem Erhitzen bis zum Karamelisieren des Zuckers gekocht wird. Auch dabei ist in weiterer Ausgestaltung anschließend an das Abkühlen des erhaltenen Kräuterkaramels dessen nochmaliges kurzes Aufkochen zu weiterem Karamelisieren von Vorteil.

Zur weiteren Erläuterung der Erfindung werden nachstehend noch zwei Ausführungsbeispiele näher beschrieben:

### Beispiel 1

Einem 18-%igen wäßrigen Extrakt, der aus einem Absud getrockneter Blüten von Holunder (Sambucus nigra) gewonnen worden ist, werden 18 Gewichts-% raffinierter Zucker zugegeben, dem zuvor 3,5 Gewichts-% Zitronensäure und 0,8 Gewichts-% Sorbinsäure beigemischt worden sind. Die erhaltene Mischung wird durch mäßiges Kochen karamelisiert, wobei der entstehende Schaum fortlaufend beseitigt wird. Die ein wenig abgekühlte Mischung wird dann bei mäßigem Kochen nochmals karamelisiert.
Als Ergebnis wird ein goldgelber Kräuterkaramel erhalten, der in seiner Konsistenz Bienenhonig ähnelt. Eine Verzuckerung des Karamels tritt auch nach einer Lagerzeit von zwölf Monaten und mehr nicht auf.

### Beispiel 2

Die Arbeitsweise von Beispiel wird dahingehend abgewandelt, daß eine Mischung von 29 Gewichts-% eines wäßrigen Extrakts aus getrockneter Holunderfrucht (Sambucus nigra) mit 69 Gewichts-% Rohzucker, 2 Gewichts-% Zitronensäure und 1 Gewichts-% Weinsäure erstellt und der Karamelisierung unterworfen wird.
Es wird ein Kräuterkaramel von dunkler Honigfarbe mit einem Stich nach Braunrot erhalten, dessen Konsistenz der von Bienenhonig ähnelt. Der Kräuterkaramel zeigt langsames Fließverhalten und verzuckert auch nach langer Lagerung von zwölf Monaten und mehr nicht.

## Patentansprüche

1. Karamel für Nahrungs- und/oder Therapiezwecke, gekennzeichnet durch einen Gehalt an - insbesondere wäßrigem - Kräuterextrakt.

2. Karamel nach Anspruch 1, dadurch gekennzeichnet,
daß der Kräuterextrakt aus Blüte und/oder Frucht des Holunders (Sambucus nigra) gewonnen ist.

3. Karamel nach Anspruch 1, dadurch gekennzeichnet,
daß der Kräuterextrakt aus der Blüte der Königskerze (Verbascum) gewonnen ist.

4. Karamel nach Anspruch 1, dadurch gekennzeichnet,
daß der Kräuterextrakt aus der Blüte der Linde (Tilia) gewonnen ist.

5. Karamel nach Anspruch 1, dadurch gekennzeichnet,
daß der Kräuterextrakt aus dem Kettenlattichkraut (Taraxacum officinale) gewonnen ist.

6. Karamel nach Anspruch 1, dadurch gekennzeichnet,
daß der Kräuterextrakt aus dem Blattwerk des Salbeis (Salvia officinalis) gewonnen ist.

7. Karamel nach einem der Ansprüche 1 bis 6, dadurch gekennzeichnet,
daß der Kräuterextrakt Bestandteile von wenigstens zwei der folgenden Wirkstoffpflanzen enthält: Holunder (Sambucus nigra), Königskerze (Verbascum), Linde (Tilia), Kettenlattichkraut (Taraxacum officinale), Salbei (Salvia officinale).

8. Karamel nach einem der Ansprüche 1 bis 7, gekennzeichnet durch einen Zusatz einer geringen Menge einer organischen Säure wie Zitronensäure und/oder Weinsäure und/oder Sorbinsäure.

9. Karamel nach einem der Ansprüche 1 bis 8, gekennzeichnet durch eine Zusammensetzung aus:
- 15 bis 29 Gewichts-% wäßrigem Kräuterextrakt,
- 0,5 bis 6 Gewichts-% Zitronensäure und/oder Weinsäure und/oder Sorbinsäure und
- 60 bis 88 Gewichts-% karamelisiertem Zucker.

10. Verfahren zum Herstellen eines Karamels, insbesondere nach einem der Ansprüche 1 bis 9, dadurch gekennzeichnet,
daß durch Erwärmen eines Gemischs aus Wasser und wenigstens einer Kräuterpflanze ein wäßriger Kräuterextrakt bereitet wird,
daß die Kräuterpflanze abgetrennt und dem Extrakt Zucker zugesetzt wird und
daß die so erhaltene Mischung unter ständigem Abschöpfen entstehenden Schaums sanft gekocht wird, bis der zugesetzte Zucker karamelisiert.

11. Verfahren nach Anspruch 10, dadurch gekennzeichnet,
daß dem Extrakt vor dem Kochen außer Zucker wenigstens eine organische Säure zugesetzt wird.

12. Verfahren nach Anspruch 11, dadurch gekennzeichnet,
daß dem Extrakt wenigstens eine der folgenden Säuren zugesetzt wird: Zitronensäure, Weinsäure, Sorbinsäure.

13. Verfahren nach einem der Ansprüche 10 bis 12, dadurch gekennzeichnet,
daß die Mischung nach dem Karamelisieren zu nochmaligem Karamelisieren sanft weitergekocht wird.

14. Verfahren nach einem der Ansprüche 10 bis 13, dadurch gekennzeichnet,
daß der Kräuterextrakt aus getrockneten Kräuterpflanzen bereitet wird.

15. Verfahren nach einem der Ansprüche 10 bis 14, dadurch gekennzeichnet,
daß der Kräuterextrakt aus Blüte und/oder Frucht des Holunders (Sambucus nigra) bereitet wird.

16. Verfahren nach einem der Ansprüche 10 bis 14, dadurch gekennzeichnet,
daß der Kräuterextrakt aus der Blüte der Königskerze (Verbascum) bereitet wird.

17. Verfahren nach einem der Ansprüche 10 bis 14, dadurch gekennzeichnet,
daß der Kräuterextrakt aus der Blüte der Linde (Tilia) bereitet wird.

18. Verfahren nach einem der Ansprüche 10 bis 14, dadurch gekennzeichnet,
daß der Kräuterextrakt aus dem Kettenlattichkraut (Taraxacum officinale bereitet wird.

19. Verfahren nach einem der Ansprüche 10 bis 14, dadurch gekennzeichnet,
daß der Kräuterextrakt aus dem Blattwerk des Salbeis (Salvia officinalis) bereitet wird.

20. Verfahren nach einem der Ansprüche 10 bis 19, dadurch gekennzeichnet,
daß bei der Bereitung des Kräuterextrakts Bestandteile von wenigstens zwei der folgenden Wirkstoffpflanzen verwendet werden: Holunder (Sambucus nigra), Königskerze (Verbascum), Linde (Tilia), Kettenlattichkraut (Taraxacum officinale), Salbei (Salvia officinale).

21. Verfahren nach einem der Ansprüche 10 bis 20, dadurch gekennzeichnet,
daß 15 bis 29 Gewichts-% wäßrigem Kräuterextrakt 0,5 bis 6 Gewichts-% Zitronensäure und/oder Weinsäure und/oder Sorbinsäure sowie 60 bis 88 Gewichts-% Zucker zugesetzt werden und die erhaltene Mischung unter mäßigem Erhitzen bis zum Karamelisieren des Zuckers gekocht wird.
